# EUROPÄISCHE PATENTSCHRIFT

(11) **EP 2 632 776 B1**
(45) Veröffentlichungstag und Bekanntmachung des Hinweises auf die Patenterteilung: **19.07.2017**
(21) Anmeldenummer: 11754986.5
(22) Anmeldetag: 04.08.2011
(51) Int. Cl.: C06B 45/00, C06D 5/00, F42B 5/16, B60R 21/264

(54) **VERFAHREN ZUR HERSTELLUNG VON FESTTREIBSTOFFTABLETTEN, FESTTREIBSTOFFTABLETTE, GASGENERATOR UND MODUL MIT GASGENERATOR**
METHOD FOR PRODUCING SOLID FUEL TABLETS, SOLID FUEL TABLETS, GAS GENERATOR, AND MODULE HAVING A GAS GENERATOR
PROCÉDÉ DE PRODUCTION DE PASTILLES DE PROPERGOL SOLIDE, PASTILLE DE PROPERGOL SOLIDE, GÉNÉRATEUR DE GAZ ET MODULE COMPORTANT UN GÉNÉRATEUR DE GAZ

(30) Priorität: 29.10.2010 DE 102010049765
(43) Veröffentlichungstag der Anmeldung: 04.09.2013
(73) Patentinhaber: TRW Airbag Systems GmbH, 84544 Aschau am Inn (DE)
(72) Erfinder: BERNAU, Klaus, 83564 Soyen (DE); BICHLMAIER, Christian, 84573 Schönberg (DE); REICHGRUBER, Sebastian, 84549 Engelsberg (DE)
(74) Vertreter: Mehnert, Bernhard
(86) Internationale Anmeldenummer: PCT/EP2011/003917
(87) Internationale Veröffentlichungsnummer: WO 2012/055451

(56) Entgegenhaltungen:
- WO-A2-2004/094188
- DE-A1-102004 062 936
- DE-U1- 29 814 559
- US-A- 120 862
- US-A- 1 159 109
- US-A- 4 581 998
- US-A- 5 019 220
- US-A- 6 136 111

## Beschreibung

Die Erfindung betrifft ein Verfahren zur Herstellung von Festtreibstofftabletten, insbesondere für einen Gasgenerator und/oder einen pyrotechnischen Aktuator eines Fahrzeuginsassenrückhaltesystems, eine Festtreibstofftablette, einen Gasgenerator mit zumindest einer Brennkammer und ein Modul mit einem solchen Gasgenerator.

Aus dem Stand der Technik ist es bekannt, Festtreibstofftabletten für Gasgeneratoren in zylindrischer Form aus einem pulverförmigen oder granulatförmigen Festtreibstoff zu pressen. Derartige Festtreibstofftabletten ermöglichen jedoch nur ein limitiertes Verhältnis zwischen Oberfläche und Volumen der Tablette. Um schnelle Druckanstiege im Gasgenerator zu ermöglichen, ist ein möglichst großes Verhältnis von Oberfläche zu Volumen des Festtreibstoffs wünschenswert. Aus dem Dokument US 6 136 111 ist ein Verfahren bekannt bei dem vorgeformte Tablettenrohlinge gebrochen und die resultierenden Partikel entsprechend der gewünschten Partikelgröße gesiebt werden. Ferner ist es bekannt, Festtreibstoff in Form eines Granulats mit verschiedenen Korngrößen für Gasgeneratoren zu verwenden. Bei einem derartigen Granulat kann aber kein definiertes Oberfläche/Volumenverhältnis bestimmt werden, wodurch sich eine gewisse Streuung in der Leistungscharakteristik der Gasgeneratoren ergibt. Die Oberflächenstruktur eines derartigen Granulats ist im allgemeinen undefiniert und derartiges Granulat kann einen zusätzlichen Anteil an Granulatbruch oder Granulatstaub aufweisen, wodurch sich ebenfalls eine gewisse Streuung in der Leistungscharakteristik der Gasgeneratoren ergeben kann.

Aufgabe der Erfindung ist es, ein Verfahren zur Herstellung von Festtreibstofftabletten zu schaffen, welche ein definiertes und optimiertes Oberfläche/Volumenverhältnis aufweisen, sowie eine Festtreibstofftablette und einen leistungsstarken Gasgenerator und ein Modul für ein Fahrzeuginsassenrückhaltesystem mit einem solchen Gasgenerator zu schaffen.

Die Aufgabe wird durch ein erfindungsgemäßes Verfahren zur Herstellung von Festtreibstofftabletten, für einen Gasgenerator und/oder einen pyrotechnischen Aktuator eines Fahrzeuginsassenrückhaltesystems, gelöst. Das Verfahren umfasst das Bereitstellen eines Festtreibstoffes, das Pressen des Festtreibstoffes in einen Tablettenrohling, wobei der Tablettenrohling zumindest eine Sollbruchstelle aufweist, welche den Tablettenrohling in zumindest zwei Teilbereiche aufteilt, und das Brechen des Tablettenrohlings entlang der zumindest einen Sollbruchstelle, wobei die zumindest zwei Teilbereiche jeweils eine Festtreibstofftablette bilden. Auf diese Weise können Festtreibstofftabletten mit kleinem Volumen und großer Oberfläche hergestellt werden, die nicht einzeln gepresst werden müssen. Somit kann das Oberfläche/Volumenverhältnis optimiert werden. Da der Tablettenrohling entlang der Sollbruchstelle gebrochen wird, wird eine definierte Geometrie der Festtreibstofftabletten und somit ein definiertes Oberfläche/Volumenverhältnis der Festtreibstofftabletten geschaffen. Zudem hat das besonders kleine Volumen derart hergestellter Festtreibstofftabletten den Vorteil, dass auch räumlich komplex ausgebildete Brennkammern eines Gasgenerators, bezüglich Ausnutzung eines Brennraumes, sehr effizient mit diesen Festtreibstofftabletten befüllbar sind. Es lässt sich also diesbezüglich eine optimierte Fülldichte erreichen.

Vorzugsweise wird der Tablettenrohling beim Auswerfen aus einer Presse gebrochen. Auf diese Weise wird der Verfahrensschritt des Brechens mit dem des Pressens des Tablettenrohlings kombiniert, und es ist kein separater Arbeitsschritt zum Brechen des Tablettenrohlings im Herstellungsverfahren notwendig.

Alternativ kann der Tablettenrohling ein Zwischenprodukt bilden und in einem vom Pressen separaten Verfahrensschritt gebrochen werden. Dies ermöglicht beispielsweise die Lagerung oder den Transport der Tablettenrohlinge vor dem Brechen.

Gemäß einer bevorzugten Ausführungsform wird die Sollbruchstelle von einem Bereich verringerter Tablettendicke gebildet. Auf diese Weise kann die Sollbruchstelle durch die Form der Presse erzeugt werden.

Beispielsweise kann die Tablettendicke zur Sollbruchstelle kontinuierlich verringert sein.

Eine einfache Geometrie des Tablettenrohlings und der benötigten Form der Presse wird ermöglicht, indem der Tablettenrohling flach und/oder zylindrisch ausgebildet ist, wobei die Sollbruchstelle in wenigstens einer der entgegengesetzten Stirnseiten ausgebildet ist und indem die Sollbruchstelle eine Sollbruchlinie darstellt, wobei die Sollbruchlinie sich vorzugsweise von einem Bereich des Umfangs des Tablettenrohlings zu einem anderen Bereich des Umfangs des Tablettenrohlings erstreckt.

Der Radius des Tablettenrohlings kann größer oder gleich einem Millimeter sein, vorzugsweise in einem Bereich von 1 mm bis 5mm, weiters vorzugsweise in einem Bereich von 1,5mm bis 4,5mm, insbesondere vorzugsweise in einem Bereich von 2,5mm bis 3,5mm. Durch das Brechen des Tablettenrohlings sind Abmessungen der Festtreibstofftablette unter einem Millimeter möglich, während die Pressform des Tablettenrohlings auch größer als ein Millimeter sein kann. Es müssen somit keine Pressformen unter einem Millimeter Radius bereitgestellt werden.

Vorzugsweise wird der Festtreibstoff als Pulver, mit einer maximalen Korngröße von 200µm oder als Granulat, mit einer mittleren Korngröße von größer als 200µm bereitgestellt.

Um ein möglichst genaues Oberfläche/Volumenverhältnis der Festtreibstofftabletten zu erhalten, können alle Festtreibstofftabletten eines Tablettenrohlings im Wesentlichen gleich ausgebildet sein.

Alternativ sind wenigstens zwei Festtreibstofftabletten eines Tablettenrohlings verschieden ausgebildet. Die Geometrien der verschiedenen Festtreibstofftabletten können beispielsweise zur Optimierung der Packung in einer Brennkammer eines Gasgenerators ausgebildet sein.

Die Aufgabe der Erfindung bezüglich der Festtreibstofftablette wird erfindungsgemäß dadurch gelöst, dass eine aus einem gepressten Tablettenrohling mit zumindest einer Sollbruchlinie durch Brechen des Tablettenrohlings entlang der zumindest einen Sollbruchlinie hergestellte Festtreibstofftablette im Wesentlichen die Form eines Zylindersektors aufweist. Unter Zylindersektor im Sinne der Erfindung ist eine dreidimensionale Form gemeint, für die auch im Allgemeinen die Bezeichnung "Tortenstück" verwendet wird. Das heißt, es handelt sich dabei um ein Teilstück, welches aus einer im Wesentlichen zylinderförmigen Grundform (gedanklich) "herausgebrochen" ist, wobei die Bruchkanten bzw. Bruchflächen ausgehend von der umlaufenden Mantelfläche in Richtung Zentrum (Mitte) der zylindrischen Grundform verlaufen. Hierbei bleibt ein Teilbereich der Mantelfläche der zylindrischen Grundform erhalten und ist, in der Draufsicht des Zylindersektors betrachtet, als Kreisbogen ausgebildet.

Dabei kann eine Ausführungsform der Festtreibstofftablette eine Mantelfläche haben, welche einen Bereich in Form eines geraden Zylinders und einen daran anschließenden Bereich mit einer konvexen Krümmung, insbesondere in Richtung der Mitte des Tablettenrohlings, aufweist.

Oben beschriebene Festtreibstofftabletten können durch das Brechen ausgebildete Bruchflächen mit einer größeren Oberflächenrauhigkeit aufweisen, als die restlichen die Festtreibstofftablette begrenzenden Flächen, insbesondere Mantelfläche und/oder obere und untere Stirnseiten.

Die Aufgabe der Erfindung wird ferner durch einen erfindungsgemäßen Gasgenerator mit zumindest einer Brennkammer gelöst. Die Brennkammer ist im nicht aktivierten Zustand des Gasgenerators mit einer Mehrzahl von Festtreibstofftabletten nach Anspruch 8 oder 9 gefüllt, wobei alle oder ein Teil der Festtreibstofftabletten jeweils eine Oberfläche mit einer Bruchstelle aufweisen, die zumindest durch zwei aufeinander zulaufende, durch Pressen erzeugte Oberflächen begrenzt wird. Die Festtreibstofftabletten sind vorzugsweise gemäß dem oben beschriebenen Verfahren hergestellt. Durch die beiden durch Pressen erzeugten Oberflächen wird die Bruchstelle der Festtreibstofftabletten definiert, somit haben die Festtreibstofftabletten trotz ihrer Bruchstelle eine im Wesentlichen fest definierte Geometrie.

Vorzugsweise verlaufen die beiden entgegengesetzt liegenden, gepressten Oberflächen in einem Winkel zwischen 45° und 180° zueinander.

Zur möglichst genauen Bestimmung des Oberfläche/Volumenverhältnisses der Festtreibstofftabletten in der Brennkammer des Gasgenerators sind die Festtreibstofftabletten vorzugsweise Bruchteile eines Tablettenrohlings und jeweils im Wesentlichen gleich ausgebildet.

Die Brennkammer des erfindungsgemäßen Gasgenerators ist insbesondere mit einer chaotischen Schüttung von Treibstofftabletten gefüllt und kann zusätzlich noch einen Filter aufweisen.

Die Aufgabe der Erfindung wird ferner durch ein erfindungsgemäßes Modul, welches einem oben beschriebenen erfindungsgemäßen Gasgenerator aufweist, gelöst. Dabei weist das Modul zusätzlich einen aufblasbaren Gassack und eine Befestigungseinrichtung zur Anbringung des Moduls, insbesondere im Innenbereich eines Fahrzeuges, auf.

Weitere Merkmale und Vorteile der Erfindung ergeben sich aus der nachfolgenden Beschreibung und den nachfolgenden Zeichnungen, auf die Bezug genommen wird. In den Zeichnungen zeigen:
- Figur 1 eine schematische Darstellung eines erfindungsgemäßen Verfahrens zur Herstellung von Festtreibstofftabletten
- Figur 2 eine erste Ausführungsform eines Tablettenrohlings, hergestellt nach einem erfindungsgemäßen Verfahren;
- Figur 3 eine Schnittansicht einer zweiten Ausführungsform eines Tablettenrohlings, hergestellt nach einem erfindungsgemäßen Verfahren;
- Figur 4 eine Schnittansicht einer dritten, asymmetrischen Ausführungsform eines Tablettenrohlings, hergestellt nach einem erfindungsgemäßen Verfahren;
- Figur 5 eine Draufsicht auf eine vierte Ausführungsform eines Tablettenrohlings, hergestellt nach einem erfindungsgemäßen Verfahren; und
- Figur 6 eine schematische Schnittansicht eines erfindungsgemäßen Gasgenerators.
- Figur 7 Eine fünfte Ausführungsform eines Tablettenrohlings, hergestellt nach einem erfindungsgemäßen Verfahren.
- Figur 8 Erfindungsgemäße Festtreibstofftablette nach Brechen des Tablettenrohlings nach Figur 7 entlang zumindest einer Sollbruchstelle.
- Figur 9 Erfindungsgemäße Festtreibstofftablette nach Brechen des Tablettenrohlings nach Figur 5 entlang zumindest einer Sollbruchstelle.

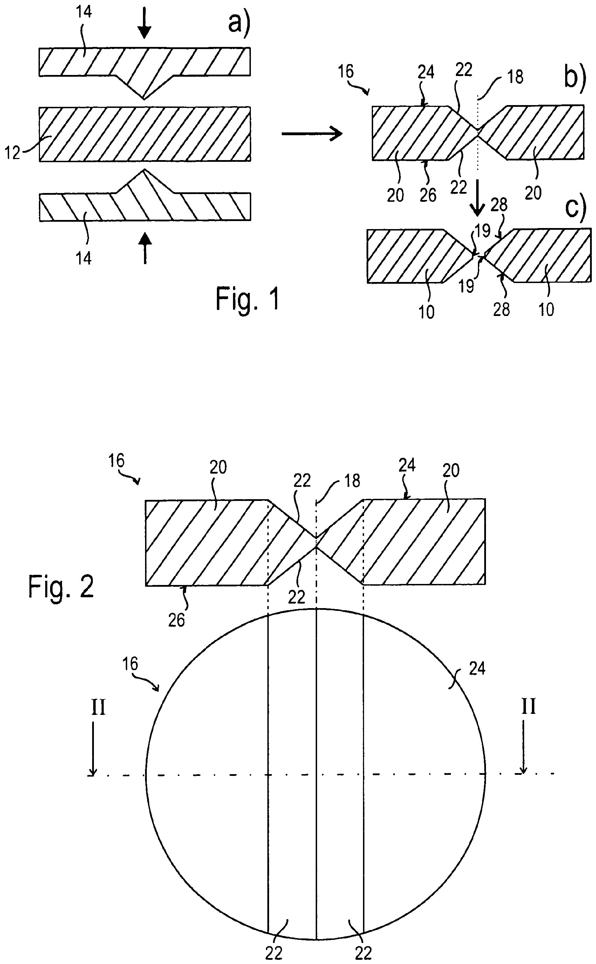

Ein Verfahren zur Herstellung von Festtreibstofftabletten 10 ist in Figur 1 schematisch dargestellt. Im Bildteil a) ist ein erster Verfahrensschritt zu sehen, in dem ein pulverförmiger Festtreibstoff 12 in einem Arbeitsraum einer Presse 14 bereitgestellt wird. In einem darauffolgenden Verfahrensschritt wird der Festtreibstoff 12 durch die Presse 14 zu einem Tablettenrohling 16 gepresst.

Der gepresste Tablettenrohling 16 ist im Bildteil b) dargestellt. In der Mitte des Tablettenrohlings 16 ist eine durch die gepunktete Linie dargestellte Sollbruchstelle 18 vorhanden, welche den Tablettenrohling 16 in zwei Teilbereiche 20 aufteilt.

In einem abschließenden Verfahrensschritt wird der Tablettenrohling 16 entlang der Sollbruchstelle 18 gebrochen, wobei die zwei Teilbereiche 20 jeweils eine Festtreibstofftablette 10 bilden. Die beiden auseinandergebrochenen Festtreibstofftabletten 10 sind im Bildteil c) dargestellt.

Da die Größe des Tablettenrohlings 16 ein Vielfaches der Größe der Festtreibstofftabletten 10 ist, kann der Arbeitsraum der Presse 14 entsprechend größer ausgebildet sein als die fertigen Festtreibstofftabletten 10.

Das Verfahren ermöglicht die Herstellung von Festtreibstofftabletten 10 mit einem gegenüber herkömmlichen zylindrischen Tabletten größeren Oberfläche/Volumenverhältnis.

Wie im Bildteil c) von Figur 1 gut zu erkennen ist, weist jede Festtreibstofftablette 10 jeweils eine Oberfläche mit einer Bruchstelle 19 auf, die durch zumindest zwei aufeinander zu laufende, durch Pressen erzeugte Oberflächen 28 begrenzt wird. Die beiden gepressten Oberflächen 28 einer Festtreibstofftablette 10 verlaufen in der gezeigten Ausführungsform in einem Winkel von ca. 80° zueinander.

Figur 2 zeigt im unteren Bereich eine Draufsicht auf den Tablettenrohling 16 und im oberen Bereich eine Schnittansicht gemäß der Schnittebene II-II. Der Tablettenrohling 16 weist einen Bereich 22 mit verringerter Tablettendicke auf, der sich über den gesamten Durchmesser des Tablettenrohlings 16 erstreckt und die Sollbruchstelle 18 an der Stelle mit der geringsten Tablettendicke bildet. Die Sollbruchstelle 18 ist hier durch eine strichpunktierte Linie als Sollbruchlinie 18 dargestellt.

Der Tablettenrohling 16 ist flach und zylindrisch ausgebildet, wobei jeweils ein Bereich 22 mit verringerter Tablettendicke in der oberen Stirnseite 24 und in der unteren Stirnseite 26 des Tablettenrohlings 16 vorgesehen ist. Die Bereiche 22 mit verringerter Tablettendicke sind jeweils symmetrisch zu Sollbruchlinie 18 ausgebildet.

Alternativ können die Tablettenrohlinge 16 anstelle der gezeigten Bereiche 22 mit verringerter Tablettendicke mit kontinuierlicher Verringerung der Tablettendicke in Form von V-förmigen Kerben auch Nuten aufweisen, bei denen sich die Tablettendicke in einer oder mehreren Stufen verringert.

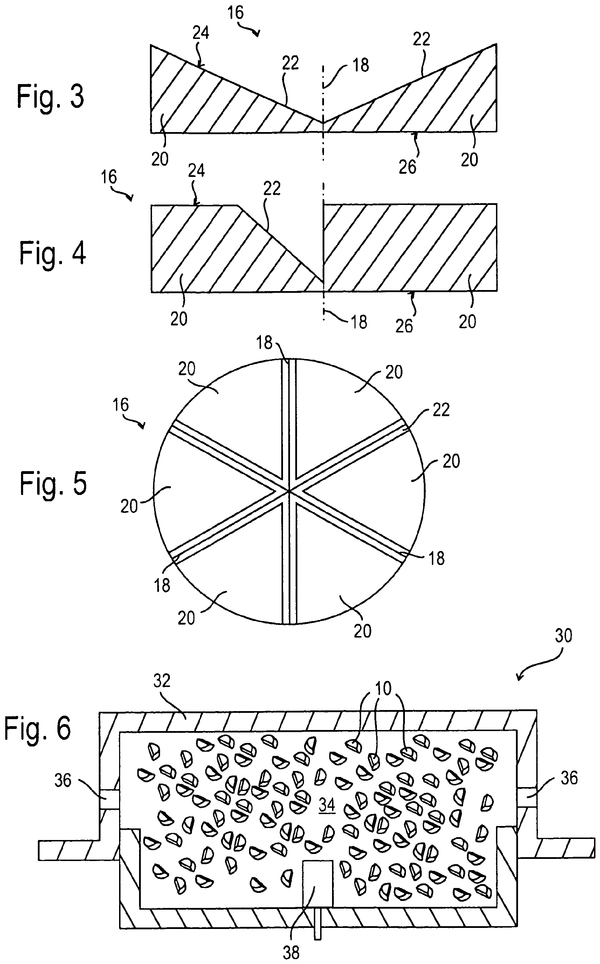

Figur 3 zeigt eine zweite Ausführungsform eines Tablettenrohlings 16, wobei sich der Bereich 22 mit verringerter Tablettendicke über die gesamte obere Stirnseite 24 erstreckt und sich die Tablettendicke zur Sollbruchlinie 18 kontinuierlich verringert.

Figur 4 stellt eine dritte Ausführungsform eines Tablettenrohlings 16 dar, mit einer asymmetrisch ausgebildeten Sollbruchstelle 18, bei der nur im linken Teilbereich 20 ein Bereich 22 mit verringerter Tablettendicke vorhanden ist.

Durch die asymmetrische Sollbruchstelle 18 können beispielsweise unterschiedlich ausgebildete Festtreibstofftabletten 10 aus einem Tablettenrohling 16 hergestellt werden. Alternativ können die Teilbereiche 20 des Tablettenrohlings 16 jeweils zwei asymmetrische Sollbruchstellen 18 aufweisen, welche symmetrisch zueinander sind und eine Symmetrie der Festtreibstofftabletten 10 wiederherstellen.

Figur 5 zeigt eine vierte Ausführungsform eines Tablettenrohlings 16 mit sechs Teilbereichen 20, die jeweils durch Bereiche 22 mit verringerter Tablettendicke und einer Sollbruchstelle 18 miteinander verbunden sind. Alle Teilbereiche 20 sind gleich ausgebildet, wodurch nach dem Brechen des Tablettenrohlings 16 alle Festtreibstofftabletten 10 des Tablettenrohlings 16 im Wesentlichen gleich ausgebildet sind. Geringe Toleranzen können im Bereich der Bruchstellen 19 beim Brechen des Tablettenrohlings 16 auftreten.

Alle Tablettenrohlinge werden vor der Befüllung der Brennkammer gebrochen, insbesondere unmittelbar nach dem Pressen.

Figur 6 zeigt eine schematische Schnittansicht eines Gasgenerators 30 mit einem Gehäuse 32 und einer Brennkammer 34. Der Brennkammer 34 sind Ausströmöffnungen 36 im Gehäuse 32 und ein Anzünder 38 zugeordnet. Die Brennkammer 34 kann zudem einen nicht dargestellten Filter aufweisen.

Im nicht aktivierten Zustand des Gasgenerators 30 ist die Brennkammer 34 mit einer Mehrzahl von Festtreibstofftabletten 10 gefüllt (chaotische Schüttung). Die Festtreibstofftabletten 10 sind analog zu den in Figur 1 Bildbereich c) abgebildeten Festtreibstofftabletten 10 ausgebildet. Es könnten jedoch auch andere Festtreibstofftabletten 10 vorgesehen sein, die beispielsweise durch Brechen der in den Figuren 3 bis 5 gezeigten Tablettenrohlinge 16 entstehen.

In der in Figur 6 gezeigten Ausführungsform sind die Festtreibstofftabletten 10 alle im Wesentlichen gleich ausgebildet. Auf diese Weise ergibt sich ein definiertes Oberfläche/Volumenverhältnis der Festtreibstofftabletten 10 im Gasgenerator 30. Durch die große Gesamtoberfläche der Festtreibstofftabletten 10 ergibt sich ein schneller Druckanstieg beim Aktivieren des Gasgenerators durch den Anzünder 38. Da das Oberfläche/Volumenverhältnis der Festtreibstofftabletten 10 genau definiert ist, ergibt sich eine geringe Streuung der Leistungscharakteristik des Gasgenerators 30.

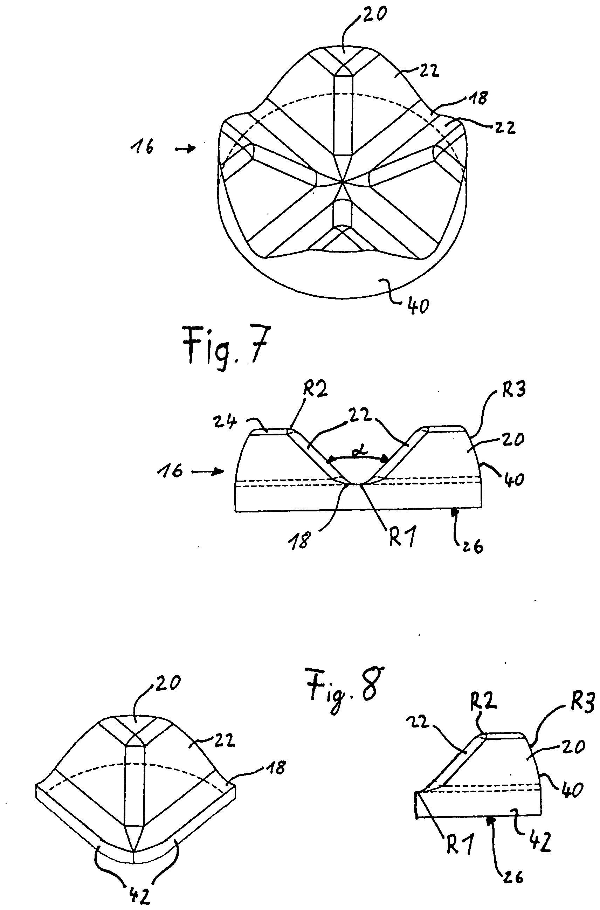

Figur 7 zeigt im oberen Bereich eine perspektivische Ansicht und im unteren Bereich eine Seitenansicht einer fünften Ausführungsform eines Tablettenrohlings 16 mit vier Teilbereichen 20, die jeweils durch Bereiche 22 mit verringerter Tablettendicke und einer Sollbruchstelle 18 miteinander verbunden sind. Die Anzahl der Teilbereiche 20 kann auch mehr als vier Teilbereiche 20 betragen, zumindest ein Vielfaches der Anzahl zwei, also zum Beispiel sechs, acht oder zehn. Von jeweils zwei benachbarten Teilbereichen 20 sind jeweils gegenüberliegende, flächig ausgebildete Bereiche 22 unter einem Winkel α = 90° zueinander positioniert. Der Winkel α kann in einem Bereich von 40° bis 140° liegen, wobei insbesondere Werte von 95°, 100°, 105°, 85°, 80° oder 75° denkbar sind. Im Bereich der Sollbruchstelle 18 gehen die flächig ausgebildeten Bereiche 22 von benachbarten Teilbereichen 20 mit einem Radius R1 = 0,15 mm ineinander über. Zudem gehen bei jedem der vier Teilbereiche 20 jeweils ein Bereich der oberen Stirnseite 24 des Tablettenrohlings 16 und ein flächig ausgebildeter Bereich 22 mit einem Radius R2 = 0,15 mm ineinander über. Die Radien R1, R2 können in einem Bereich von 0,05 mm bis 0,25 mm liegen.

Der Tablettenrohling 16 weist eine umlaufende Mantelfläche 40 auf, welche bereichsweise gekrümmt verläuft. Wie in der Seitenansicht (unterer Bereich von Fig. 7) ersichtlich, ist die Mantelfläche 40 in einem unteren Bereich, ausgehend von der unteren Stirnseite 26 des Tablettenrohlings 16 bis auf Höhe der Sollbruchstelle 18 in Form eines geraden Zylinders ausgebildet. In ihrem weiteren Verlauf, ab Höhe der Sollbruchstelle bis zur oberen Stirnseite 24 des Tablettenrohlings, weist die Mantelfläche 40 eine konvexe Krümmung mit einem Radius R3, in Richtung der Mitte des Tablettenrohlings 16 auf.

Alle Teilbereiche 20 sind gleich ausgebildet, wodurch nach dem Brechen des Tablettenrohlings 16 alle Festtreibstofftabletten 10 des Tablettenrohlings 16 im Wesentlichen gleich ausgebildet sind. Geringe Toleranzen können im Bereich der Bruchstellen 19 beim Brechen des Tablettenrohlings 16 auftreten.

Figur 8 zeigt im linken Bereich eine perspektivische Ansicht und im rechten Bereich die zugehörige Seitenansicht einer erfindungsgemäßen Festtreibstofftablette 10, hergestellt durch Brechen entlang zumindest zweier Sollbruchstellen 18 eines Tablettenrohlings 16, wie er in Figur 7 dargestellt ist, mit ausgebildeten Bruchflächen 42.

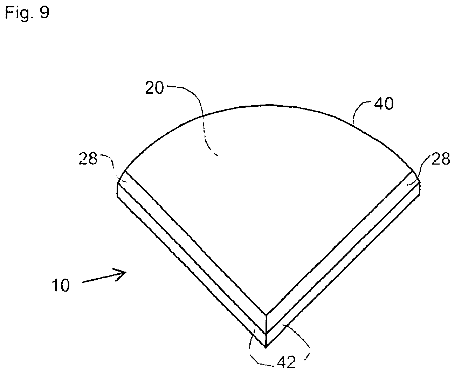

Figur 9 zeigt eine erfindungsgemäße Festtreibstofftablette 10, hergestellt durch Brechen eines Tablettenrohlings 16, wie er in Figur 5 dargestellt ist, entlang zumindest zweier Sollbruchstellen 18, mit zwei ausgebildeten Bruchflächen 42. Die Festtreibstofftablette 10 weist eine Mantelfläche 40 auf, welche einen Teilbereich einer umlaufenden Mantelfläche des ursprünglichen Tablettenrohlings 16 darstellt. Die Mantelfläche 40, die beiden Oberflächen 28 und die beiden Stirnseiten 24, 26 (siehe Fig. 3) sind durch Pressen des Tablettenrohlings 16 gebildet und weisen jeweils eine relativ glatte Oberfläche auf, wohingegen die beiden Bruchflächen 42 eine relativ rauhe Oberfläche aufweisen.

Natürlich ist es auch denkbar, dass aus einem Tablettenrohling 16, wie in Figur 5 dargestellt, nicht nur ein einziger Teilbereich 20 herausbrechbar ist (siehe Figur 9), sondern auch mehrere, untereinander zusammenhängende Teilbereiche 20.

Auch ist es möglich, den Tablettenrohling 16, wie er in Figur 2 dargestellt ist, entlang der Sollbruchstelle 18 zu brechen, um zwei erfindungsgemäße Festtreibstofftabletten 10 zu erhalten.

In allen oben beschriebenen Fällen einer Festtreibstofftablette 10, hergestellt durch Brechen eines Tablettenrohlings 16 wird eine Festtreibstofftablette 10 gebildet, welche im Wesentlichen die Form eines Zylindersektors aufweist.

Die Erfindung umfasst zudem ein nicht dargestelltes Modul mit einem oben beschriebenen erfindungsgemäßen Gasgenerator. Dieses Modul weist zudem einen von diesem Gasgenerator aufblasbaren Gassack und eine Befestigungseinrichtung zur Anbringung des Moduls, insbesondere im Innenbereich eines Fahrzeuges, auf.

## Patentansprüche

1. Verfahren zur Herstellung von Festtreibstofftabletten (10), für einen Gasgenerator (30) und/oder einen pyrotechnischen Aktuator eines Fahrzeuginsassenrückhaltesystems, **gekennzeichnet durch** die Verfahrensschritte:
a) Bereitstellen eines Festtreibstoffes (12);
b) Pressen des Festtreibstoffes (12) in einen Tablettenrohling (16),
wobei der Tablettenrohling (16) zumindest eine Sollbruchstelle (18) aufweist, welche den Tablettenrohling (16) in zumindest zwei Teilbereiche (20) aufteilt; und
c) Brechen des Tablettenrohlings (16) entlang der zumindest einen Sollbruchstelle (18), wobei die zumindest zwei Teilbereiche (20) jeweils eine Festtreibstofftablette (10) bilden.

2. Verfahren gemäß Anspruch 1, **dadurch gekennzeichnet, dass** der Tablettenrohling (16) beim Auswerfen aus einer Presse (14) gebrochen wird, oder **dadurch gekennzeichnet, dass** der Tablettenrohling (16) ein Zwischenprodukt bildet und der Tablettenrohling (16) in einem vom Pressen separaten Verfahrensschritt gebrochen wird.

3. Verfahren gemäß einem der vorhergehenden Ansprüche, **dadurch gekennzeichnet, dass** die Sollbruchstelle (18) von einem Bereich (22) verringerter Tablettendicke gebildet wird und/oder **dadurch gekennzeichnet, dass** die Tablettendicke zur Sollbruchstelle (18) kontinuierlich verringert ist.

4. Verfahren gemäß einem der vorhergehenden Ansprüche, **dadurch gekennzeichnet, dass** der Tablettenrohling (16) flach und/oder zylindrisch ausgebildet ist, wobei die Sollbruchstelle (18) in wenigstens einer der entgegengesetzten Stirnseiten (24, 26) ausgebildet ist und/oder **dadurch gekennzeichnet, dass** die Sollbruchstelle (18) eine Sollbruchlinie (18) darstellt, wobei die Sollbruchlinie (18) sich vorzugsweise von einem Bereich des Umfangs des Tablettenrohlings (16) zu einem anderen Bereich des Umfangs des Tablettenrohlings (16) erstreckt.

5. Verfahren gemäß einem der vorhergehenden Ansprüche, **dadurch gekennzeichnet, dass** der Radius des Tablettenrohlings (16) größer oder gleich einem Millimeter ist, vorzugsweise in einem Bereich von 1 mm bis 5mm, weiters vorzugsweise in einem Bereich von 1,5mm bis 4,5mm, insbesondere vorzugsweise in einem Bereich von 2,5mm bis 3,5mm.

6. Verfahren gemäß einem der vorhergehenden Ansprüche, **dadurch gekennzeichnet, dass** der Festtreibstoff (12) als Pulver, mit einer maximalen Korngröße von 200µm oder als Granulat, mit einer mittleren Korngröße von größer als 200µm bereitgestellt wird.

7. Verfahren gemäß einem der vorhergehenden Ansprüche, **dadurch gekennzeichnet, dass** alle Festtreibstofftabletten (10) eines Tablettenrohlings (16) im Wesentlichen gleich ausgebildet sind oder **dadurch gekennzeichnet, dass** wenigstens zwei Festtreibstofftabletten (10) eines Tablettenrohlings (16) verschieden ausgebildet sind.

8. Aus einem gepressten Tablettenrohling (16) mit zumindest einer Sollbruchlinie (18) durch Brechen des Tablettenrohlings (16) entlang der zumindest einen Sollbruchlinie (18) hergestellte Festtreibstofftablette (10), welche im Wesentlichen die Form eines Zylindersektors aufweist.

9. Festtreibstofftablette (10) gemäß Anspruch 8, **dadurch gekennzeichnet, dass** sie eine Mantelfläche (40) hat, welche einen Bereich in Form eines geraden Zylinders und einen daran anschließenden Bereich mit einer konvexen Krümmung, insbesondere in Richtung der Mitte des Tablettenrohlings (16), aufweist.

10. Festtreibstofftablette (10) gemäß zumindest einem der Ansprüche 8 oder 9, **dadurch gekennzeichnet, dass** durch das Brechen ausgebildete Bruchflächen (42) eine größere Oberflächenrauhigkeit aufweisen, als die restlichen die Festtreibstofftablette (10) begrenzenden Flächen, insbesondere Mantelfläche (40) und/oder obere und untere Stirnseiten (24, 26).

11. Gasgenerator (30) mit zumindest einer Brennkammer (34), wobei die Brennkammer (34) im nicht aktivierten Zustand des Gasgenerators (30) mit einer Mehrzahl von Festtreibstofftabletten (10) nach einem der Ansprüche 8 oder 9 gefüllt ist, wobei die Festtreibstofftabletten (10) jeweils eine Oberfläche mit einer Bruchstelle (19) aufweisen, die zumindest durch zwei aufeinander zu laufende, durch Pressen erzeugte Oberflächen (28) begrenzt wird, vorzugsweise hergestellt gemäß einem der vorhergehenden Ansprüche.

12. Gasgenerator (30) gemäß Anspruch 11, **dadurch gekennzeichnet, dass** die beiden gepressten Oberflächen (28) in einem Winkel zwischen 45° und 180° zueinander verlaufen und/oder **dadurch gekennzeichnet, dass** die Festtreibstofftabletten (10) Bruchteile eines Tablettenrohlings (16) und jeweils im Wesentlichen gleich ausgebildet sind.

13. Modul mit einem Gasgenerator (30), einem von dem Gasgenerator (30) aufblasbaren Gassack und einer Befestigungseinrichtung zur Anbringung des Moduls, insbesondere im Innenbereich eines Fahrzeuges, **dadurch gekennzeichnet, dass** der Gasgenerator (30) nach Anspruch 12 ausgebildet ist.

## Claims

1. A method for producing solid fuel tablets (10) for a gas generator (30) and/or a pyrotechnical actuator of a vehicle occupant restraint system, **characterized by** the following method steps of:
a) providing a solid fuel (12);
b) compacting the solid fuel (12) into a tablet blank (16), the tablet blank (16) having at least one predetermined breaking point (18) which divides the tablet blank (16) into at least two partial areas (20); and
c) breaking the tablet blank (16) along the at least one predetermined breaking point (18), wherein each of the at least two partial areas (20) forms a solid fuel tablet (10).

2. The method according to claim 1, **characterized in that** the tablet blank (16) is broken when it is ejected from a press (14), or **characterized in that** the tablet blank (16) forms an intermediate product and the tablet blank (16) is broken in a method step separate from compacting.

3. The method according to any one of the preceding claims, **characterized in that** the predetermined breaking point (18) is formed by an area (22) of reduced tablet thickness and/or **characterized in that** the tablet thickness is continuously reduced toward the predetermined breaking point (18).

4. The method according to any one of the preceding claims, **characterized in that** the tablet blank (16) is formed to be flat and/or cylindrical, wherein the predetermined breaking point (18) is formed in at least one of the opposite end faces (24, 26), and/or **characterized in that** the predetermined breaking point (18) constitutes a predetermined breaking line (18), wherein the predetermined breaking line (18) preferably extends from a sector of the circumference of the tablet blank (16) to another sector of the circumference of the tablet blank (16).

5. The method according to any one of the preceding claims, **characterized in that** the radius of the tablet blank (16) is larger than or equal to one millimeter, preferably within a range of from 1 mm to 5 mm, further preferred within a range of from 1.5 mm to 4.5 mm, especially preferred within a range of from 2.5 mm to 3.5 mm.

6. The method according to any one of the preceding claims, **characterized in that** the solid fuel (12) is made available as a powder having a maximum grain size of 200 µm or as granules having an average grain size of more than 200 µm.

7. The method according to any one of the preceding claims, **characterized in that** all solid fuel tablets (10) of a tablet blank (16) are substantially equally formed or **characterized in that** at least two solid fuel tablets (10) of a tablet blank (16) are formed to be different.

8. A solid fuel tablet (10) produced from a compacted tablet blank (16) having at least one predetermined breaking line (18) by breaking said tablet blank (16) along the at least one predetermined breaking line (18), said solid fuel tablet taking substantially the shape of a cylinder sector.

9. The solid fuel tablet (10) according to claim 8, **characterized in that** it comprises a circumferential surface (40) having a sector in the form of a straight cylinder and a sector adjacent thereto of convex curvature, especially in the direction of the center of the tablet blank (16).

10. The solid fuel tablet (10) according to at least one of the claims 8 or 9, **characterized in that** fracture surfaces (42) formed by breaking exhibit higher surface roughness than the residual surfaces delimiting the solid fuel tablet (10), especially the circumferential surface (40) and/or upper and lower end faces (24, 26).

11. A gas generator (30) comprising at least one combustion chamber (34), wherein in the non-activated condition of the gas generator (30) the combustion chamber (34) is filled with a plurality of solid fuel tablets (10) according to any one of the claims 8 or 9, wherein each of the solid fuel tablets (10) exhibits a surface having a breaking point (19) that is delimited at least by two converging surfaces (28) produced by compacting, being preferably produced according to any one of the preceding claims.

12. The gas generator (30) according to claim 11, **characterized in that** the two compacted surfaces (28) extend at an angle of from 45° to 180° with each other and/or **characterized in that** the solid fuel tablets (10) are fractions of a tablet blank (16) and are formed to be substantially equal.

13. A module comprising a gas generator (30), an airbag inflatable by the gas generator (30) and a fastening means for mounting the module, especially in the interior of a vehicle, **characterized in that** the gas generator (30) is configured according to claim 12.

## Revendications

1. Un procédé pour la préparation de pastilles de propergol solide (10) pour un générateur de gaz (30) et/ou un actionneur pyrotechnique d'un système de retenue de passager de véhicule, **caractérisé par** les étapes de fabrication suivantes:
a) préparation du propergol solide (12);
b) compression du propergol solide (12) en une ébauche de pastille (16), pour lequel l'ébauche de pastille (16) présente au moins une zone de rupture prédéterminée (18) qui divise l'ébauche de pastille (16) en au moins deux zones partielles (20); et
c) rupture des ébauches de pastille (16) au minimum le long de la zone de rupture prédéterminée (18), pour laquelle les deux zones partielles (20) au moins forment chacune une pastille de propergol solide (10).

2. Procédé selon la revendication 1, **caractérisé en ce que** l'ébauche de pastille (16) est cassée lors de l'éjection d'une presse (14), ou **caractérisé en ce que** l'ébauche de pastille (16) forme un produit intermédiaire et que l'ébauche de pastille (16) est cassée lors d'une des étapes du procédé de fabrication hors étape de compression.

3. Procédé selon l'une quelconque des revendications précédentes, **caractérisé en ce que** la zone de rupture prédéterminée (18) d'une région (22) est constituée d'une épaisseur réduite de la pastille et/ou **caractérisé en ce que** l'épaisseur de la pastille dans la zone de rupture prédéterminée (18) est réduite continuellement.

4. Procédé selon l'une quelconque des revendications précédentes, **caractérisé en ce que** l'ébauche de pastille (16) est plate et/ou de forme cylindrique, pour laquelle la zone de rupture prédéterminée (18) est située sur au moins une des faces externes opposées (24, 26) et/ou **caractérisé en ce que** la zone de rupture (18) représente une ligne de rupture prédéterminée (18), pour laquelle la ligne de rupture prédéterminée (18) s'étend de préférence d'une partie de la circonférence de l'ébauche de pastille (16) à une partie différente de la circonférence de l'ébauche de pastille (16).

5. Procédé selon l'une quelconque des revendications précédentes, **caractérisé en ce que** le rayon de l'ébauche de pastille (16) est supérieure ou égale à un millimètre, de préférence dans une plage de 1 mm jusqu'à 5 mm, plus préférablement dans une plage de 1,5 mm à 4,5 mm, de façon particulièrement préférée dans une plage de 2,5 mm à 3,5 mm.

6. Procédé selon l'une quelconque des revendications précédentes, **caractérisé en ce que** le propergol solide (12) est fourni sous la forme d'une poudre ayant une taille de grains maximale de 200 microns ou sous forme de granulés, ayant une taille moyenne de grains supérieure à 200 microns.

7. Procédé selon l'une quelconque des revendications précédentes, **caractérisé en ce que** toutes les pastilles de propergol solide (10) d'une ébauche de pastille (16) sont sensiblement égales ou **caractérisé en ce qu'**au moins deux pastilles de propergol solide (10) sont formées à partir d'une ébauche de pastille (16).

8. A partir d'une ébauche de pastille (16) avec au moins une ligne de rupture prédéterminée (18) la rupture des ébauches de pastille (16) le long de la ligne de rupture prédéterminée (18) produit au moins des pastilles de propergol solide (10) ayant sensiblement la forme d'un secteur cylindrique.

9. Pastille de propergol solide (10) selon la revendication 8, **caractérisé en ce qu'**elle présente une surface latérale (40), laquelle comporte une partie en forme d'un cylindre droit et une région contiguë avec une courbure convexe, en particulier en direction du centre de l'ébauche de pastille (16).

10. Pastille de propergol solide (10) selon au moins l'une des revendications 8 ou 9, **caractérisé en ce qu'**au travers de la rupture des surfaces de rupture (42) la surface obtenue a une rugosité supérieure au reste des surfaces de délimitation des pastilles de propergol solide (10), en particulier la surface latérale (40) et/ou les faces externes supérieures et inférieures (24, 26).

11. Générateur de gaz (30) ayant au moins une chambre de combustion (34), pour lequel le Chambre de combustion (34) à l'état non-activé du générateur de gaz (30) est rempli d'une pluralité de pastilles de propergol solide (10) selon l'une quelconque des revendications 8 ou 9, pour lequel les pastilles de propergol solide (10) ont chacune une surface avec une zone de rupture (19), lesquelles sont délimitées au moins par deux surfaces (28) différentes obtenues par compression, de préférence fabriquées selon l'une quelconque des revendications précédentes.

12. Générateur de gaz (30) selon la revendication 11, **caractérisé en ce que** les deux surfaces pressées (28) se situent selon un angle compris entre 45° et 180° l'une par rapport à l'autre et/ou **caractérisé en ce que** les pastilles de propergol solide (10) sont des fractions d'une ébauche de pastille (16) et que celles-ci sont sensiblement identiques.

13. Module muni d'un générateur de gaz (30), un coussin gonflable gonflé par le gaz provenant du générateur de gaz (30) et un moyen de fixation pour fixer le module, en particulier à l'intérieur d'un véhicule, **caractérisé en ce que** le générateur de gaz (30) est réalisé selon la revendication 12.
